# EUROPÄISCHE PATENTANMELDUNG

(11) **EP 1 886 720 A2**
(43) Veröffentlichungstag der Anmeldung: **13.02.2008**
(21) Anmeldenummer: 07014376.3
(22) Anmeldetag: 21.07.2007
(51) Int. Cl.: B01D 17/02

(54) **Vorrichtung zur Neutralisation von Kondensat aus einem Heizgerät**

(30) Priorität: 05.08.2006 DE 102006036727
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Die Erfindung bezieht sich auf eine Vorrichtung zur Neutralisation von Kondensat aus einem Heizgerät, welche mindestens ein Gehäuse (1) mit einem Gehäuseboden (2), mit mindestens einer Trennwand (5) zur Unterteilung des Gehäuses (1) in eine erste Kammer (6) zur Aufnahme von Bindemittel (7) und in eine zweite Kammer (8) zur Aufnahme von Neutralisationsmittel (9), mit einem Kondensateinlass (4) und mit einem Kondensatauslass (11) aufweist.

Um eine Vorrichtung zur Neutralisation von Kondensat aus einem Heizgerät zu schaffen, welche bei erhöhter Absorptions-und Neutralisationswirkung verlängerte Reinigungs- und Wartungsintervalle aufweist, wird erfindungsgemäß vorgeschlagen, dass im Bereich des Kondensateinlasses (4) eine Trenneinrichtung (14) vorgesehen ist, welche einen Kontakt zwischen im Kondensat enthaltenen Kohlenwasserstoffen und/oder Öl und dem Bindemittel (7) verhindert.

## Beschreibung

Die Erfindung betrifft eine Vorrichtung zur Neutralisation von Kondensat aus einem Heizgerät nach dem Oberbegriff des Patentanspruchs 1.

Zunehmend kommen in der Heizungstechnik Heizgeräte zum Einsatz, die als so genannte Brennwertgeräte ausgebildet sind. Hierbei wird das Abgas durch Wärmeentzug auf unter 50°C abgekühlt. Dabei tritt der eigentliche Brennwerteffekt ein, d.h. der Wasserdampf, der bei der Verbrennung von Brennstoff entsteht und im Abgas enthalten ist, erreicht den so genannten Taupunkt und kondensiert. Die dabei freigesetzte latente Kondensationswärme wird zusätzlich zur sensiblen Wärme des Abgases auf das Heizsystem übertragen. Hierdurch wird die im Brennstoff enthaltene Energie um einen weiteren Anteil nutzbar gemacht. Hierbei entsteht jedoch saures Kondenswasser bzw. Kondensat, welches Feinstaub, Schwefeloxide, Stickstoffoxide, Teer, Ruß, unverbrannte Kohlenwasserstoffe und/oder Metallverbindungen aus dem Brennstoff bzw. von den gekühlten metallischen Oberflächen, an denen das Abgas kondensiert, enthält. Das Kondensat muss in einer nachgeschalteten Neutralisationsvorrichtung behandelt werden, bevor es in die Kanalisation gelangen darf. Bei einer Neutralisation erfolgt eine pH-Wert-Verschiebung des Kondensats in Richtung "neutral". Die Neutralisation erfolgt in der Regel in der Form, dass das Kondensat ein zumeist alkalisches Granulat (z.B. Mischung aus Magnesium-Hydroxid und Magnesiumoxid oder Calciumsilikathydrat) durchfließt. Ein Teil des Granulats löst sich im Kondensat, reagiert unter Bildung eines Salzes und verschiebt so den pH-Wert auf 6,5 bis 9. Magnesium-Hydrogenkarbonat ist beispielsweise ein so entstandenes Salz. Es ist für Mensch und Umwelt unbedenklich und kann über den Hausmüll entsorgt werden. Zum Teil sind die Neutralisationsvorrichtungen im Brennwertgerät integriert, zum Teil sind sie extern in die Kondensatableitung eingebunden.

Aus der DE 93 11 083 U1 ist eine gattungsgemäße Vorrichtung zur Neutralisation von Kondensat aus Heizgeräten mit einem Neutralisationsbehälter bekannt. Der Neutralisationsbehälter weist ein Gehäuse mit einem Kondensateinlass und einem Kondensatauslass auf, welches durch eine Trennwand in zwei Kammern unterteilt ist, wobei die eine Kammer eine Bindemittelfüllung und die andere Kammer eine Neutralisationsmittelfüllung aufweist. Die Kammern sind jeweils über einen Siebboden mit einer gemeinsamen Bodenkammer des Gehäuses verbunden. Das Kondensat durchströmt die Kammern nacheinander.

Zum allgemeinen technischen Hintergrund wird noch auf die EP 0 277 300 B1 verwiesen.

Der Erfindung liegt die Aufgabe zugrunde, eine Vorrichtung zur Neutralisation von Kondensat aus einem Heizgerät zu schaffen, welche bei erhöhter Absorptions- und Neutralisationswirkung verlängerte Reinigungs- und Wartungsintervalle aufweist.

Diese Aufgabe wird erfindungsgemäß durch die im Kennzeichen des Patentanspruchs 1 gegebenen Merkmale gelöst.

Im Laufe der Zeit verbrauchen die im Kondensat befindlichen Verbrennungsrückstände das Bindemittel oder setzen die Oberfläche des Neutralisationsgranulats zu, so dass die Wirksamkeit des Bindemittels und/oder des Neutralisationsmittels nachlässt. Dadurch sind regelmäßige Wartungs- bzw. Reinigungsintervalle zur Behandlung der Vorrichtung notwendig. Ein wesentlicher Vorteil der Vorrichtung besteht deshalb in der Trennung von im Kondensat enthaltenen unverbrannten Kohlenwasserstoffen sowie der Eintrag von Feinstaub und dem Bindemittel im Bereich des Kondensateinlasses, da hierdurch die Absorptionswirkung und damit auch die Neutralisationswirkung der Vorrichtung verbessert wird. Über den Kondensateinlass gelangt das Kondensat aus dem Heizgerät zuerst in einen vom Bindemittel abgetrennten Freiraum. Dort lagern sich die im Kondensat befindlichen schwereren Teilchen, wie beispielsweise Asche, Feinstaub und Ruß, ab und können vorzugsweise über eine Entleerungsöffnung im Gehäuseboden aus dem Gehäuse entfernt werden. Das auf diese Weise von Feststoffteilchen weitestgehend gereinigte Kondensat steigt im Freiraum zwischen der Trenneinrichtung und der Gehäusewand nach oben und läuft über die Trenneinrichtung in die erste Kammer, in welcher sich die im Kondensat befindlichen Öltröpfchen bzw. unverbrannte Kohlenwasserstoffe an der Oberfläche sammeln. Das von schwimmenden Rückständen befreite Kondensat durchfließt dann das Bindemittel und gelangt anschließend in die Neutralisationskammer. Somit werden unverbrannte Kohlenwasserstoffe, z.B. Öl, vom Bindemittel zurückgehalten, wodurch sich das Bindemittel nicht so schnell verbraucht, was zu einer Verlängerung der erforderlichen Wartungs- bzw. Reinigungsintervalle führt.

Vorteilhafterweise ist die Trenneinrichtung verstellbar im Gehäuse angeordnet, so dass eine Anpassung der Größe des Freiraums an den Verschmutzungsgrad des Kondensats möglich ist.

Vorteilhafterweise mündet der Kondensateinlass in der Nähe des Gehäusebodens, so dass Strömungsgeräusche, die durch das in das Gehäuse einlaufende Kondensat erzeugt werden, gemindert sind und ein Geruchsverschluss bzw. Siphon entsteht, um auch Gasaustritt zu vermeiden.

Vorteilhafterweise mündet der Kondensateinlass in einen Freiraum zwischen dem Trennmittel und einer Gehäusewand, so dass Verbrennungsrückstände ungehindert in das Gehäuse einfließen und im Wasser sinkende Teile sich unten am Gehäuseboden absetzen können.

Vorteilhafterweise ist in einem geodätisch obenliegenden Bereich des Gehäuses eine Warneinrichtung zur Füllstandsüberwachung vorgesehen, die eine Störmeldung ausgibt, wenn ein maximaler Flüssigkeitsstand im Gehäuse überschritten ist. Vorzugsweise führt die Ausgabe der Störmeldung dann zum Abschalten eines Brenners des Heizgeräts, um die Entstehung von weiterem Kondensat zu verhindern.

Vorteilhafterweise sind am Kondensateinlass und/oder am Kondensatauslass leicht demontierbare Anschlüsse vorgesehen, die eine schnelle Wartung der Vorrichtung ermöglichen.

Weitere Ausgestaltungen und Vorteile der Erfindung gehen aus den übrigen Unteransprüchen und der Beschreibung hervor.

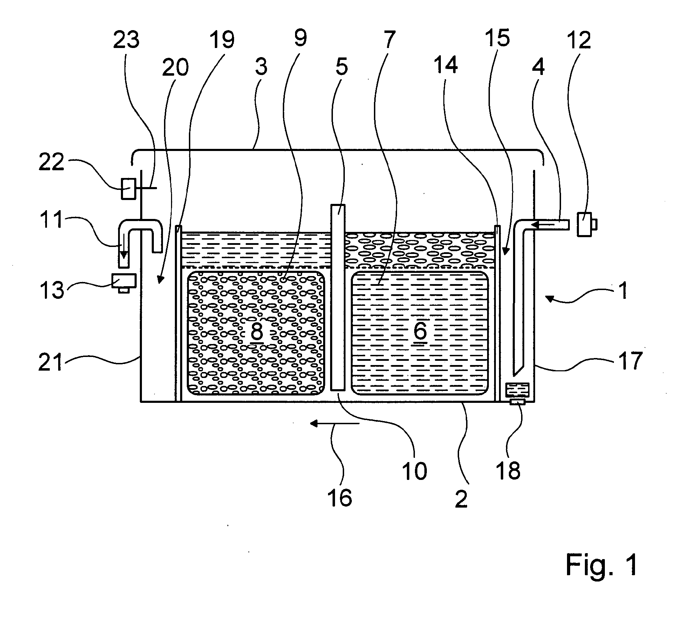

Im Folgenden wird ein Ausführungsbeispiel der Erfindung anhand einer einzigen Figur näher erläutert. Die Figur, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

Die einzige Figur zeigt in einem Längsschnitt eine erfindungsgemäße Vorrichtung zur Neutralisation von Kondensat aus einem hier nicht dargestellten Heizgerät für feste, gasförmige und/oder flüssige Brennstoffe. Das Kondensat weist Schwefelverbindungen, Kohlenwasserstoffverbindungen, wie beispielsweise Öl, Feinstaub und/oder Metallverbindungen usw., auf.

Die Vorrichtung besteht aus mindestens einem Gehäuse 1, das einen Gehäuseboden 2 aufweist und mit einem abnehmbaren Deckel 3 verschließbar ist. Das Gehäuse 1 weist einen Kondensateinlass 4 auf. Über diesen Kondensateinlass 4 kann das saure, unbehandelte Kondensat entweder gemäß vorliegendem Ausführungsbeispiel frei zufließen oder es kann über eine Förderpumpe in das Gehäuse 1 gedrückt werden.

Das Gehäuse 1 wird über eine im Gehäuse 1 befindliche Trennwand 5 in eine erste Kammer 6 zur Aufnahme von Bindemittel 7 und eine zweite Kammer 8 zur Aufnahme von Neutralisationsmittel 9 unterteilt, das in der Regel aus einer losen Schüttung von neutralisationswirksamem Granulat besteht. Die Trennwand 5 weist mindestens eine Durchflussöffnung 10 für das Kondensat auf, wobei die Kammern 6, 8 von dem Kondensat nacheinander durchströmt werden. Die erste Kammer 6 weist ein Bindemittel 7 vorzugsweise in Form von Aktivkohle und die zweite Kammer 8 ein Neutralisationsmittel 9, wie beispielsweise eine Mischung aus Magnesiumoxid und/oder Magnesiumcarbonat und/oder Kalziumcarbonat, auf. Die Aktivkohle 7 ist in der Lage, die im Kondensat befindlichen Metallverbindungen und/oder Kohlenwasserstoffe CₓH_{y}, wie z.B. Öl, Verbrennungsrückstände oder Teer zu absorbieren. Dadurch wird die Oberfläche des nachfolgenden Neutralisationsgranulats 9 nicht mit diesen Rückständen belegt und bleibt für die pH-Wert-Neutralisation länger aktiv. Das Gehäuse 1 weist einen Kondensatauslass 11 zum Abfluss des neutralisierten Kondensats auf. Am Kondensatauslass 11 und/oder am Kondensateinlass 4 sind leicht demontierbare Anschlüsse 12, 13 vorgesehen, die eine schnelle Wartung der Vorrichtung ermöglichen. Des Weiteren können vor dem Kondensateinlass 4 und/oder nach dem Kondensatauslass 11 geruchshemmende Einrichtungen vorgesehen sein.

Um eine Vorrichtung zur Neutralisation von Kondensat aus einem Heizgerät zu schaffen, welche bei erhöhter Absorptions- und Neutralisationswirkung verlängerte Reinigungs- und Wartungsintervalle aufweist, ist erfindungsgemäß im Bereich des Kondensateinlasses 4 eine Trenneinrichtung 14 vorgesehen, die einen Kontakt zwischen im Kondensat enthaltenem Öl bzw. Verbrennungsrückständen und dem Bindemittel 7 verhindert. Die vorzugsweise plattenförmige Trenneinrichtung 14 kann fest oder in Richtung einer Längsachse 16 verstellbar im Gehäuse 1 angeordnet sein. Die verstellbare Ausführung ermöglicht einen variablen Freiraum 15 zwischen der Trenneinrichtung 14 und einer Gehäusewand 17.

Vorzugsweise mündet der Kondensateinlass 4 in der Nähe des Gehäusebodens 2 in den Freiraum 15 zwischen Gehäusewand 17 und Trenneinrichtung 14, wobei der Gehäuseboden 2 im Bereich des Freiraums 15 eine Entleerungsöffnung 18 zur Abfuhr von schweren Teilchen, die sich am Gehäuseboden 2 abgesetzt haben, aufweist.

Im Bereich des Kondensatauslasses 11 ist eine weitere Trenneinrichtung 19 vorgesehen, welche einen Freiraum 20 zwischen dem Neutralisationsmittel 9 und einer Gehäusewand 21 schafft. Die Trenneinrichtung 19 ist ebenfalls fest oder in Richtung der Längsachse 16 verstellbar im Gehäuse 1 angeordnet. In der Vorrichtung kann eine Indikationseinrichtung vorgesehen sein, die anzeigt, ob saures oder neutralisiertes Kondensat das Gehäuse 1 verlässt.

In einem geodätisch obenliegenden Bereich des Gehäuses 1 ist eine Warneinrichtung 22 vorgesehen, die eine Störmeldung ausgibt, wenn ein maximaler Flüssigkeitsstand bzw. eine maximale Füllhöhe 23 im Gehäuse 1 überschritten ist. Die Abgabe der Störmeldung führt zum Abschalten eines Brenners des Heizgeräts, so dass kein weiteres Kondensat entsteht.

In einem geodätisch höherliegenden Bereich des Gehäuses 1 sind hier nicht dargestellte Bakterien vorgesehen, welche nach oben steigende, unverbrannte Kohlenwasserstoffe biologisch zu einer gallertartigen Masse abbauen.

Die Vorrichtung funktioniert als Wassersperre zur Vermeidung eines Austritts von Gasen aus dem Heizgerät.

Zur Inbetriebnahme der Vorrichtung muss das Gehäuse 1 vollständig bzw. bis zu der Füllhöhe 23 mit Wasser gefüllt werden.

Über den Kondensateinlass 4 gelangt das saure, unbehandelte Kondenswasser aus dem Heizgerät zuerst in den zwischen Gehäusewand 17 und Trenneinrichtung 14 gebildeten Freiraum 15 in die Nähe des Gehäusebodens 2. Dort lagern sich die im Kondensat befindlichen schwereren Teilchen, wie beispielsweise Asche, Feinstaub und Ruß, ab und können vorzugsweise über die Entleerungsöffnung 18 im Gehäuseboden 2 aus dem Gehäuse 1 entfernt werden. Das auf diese Weise von Feststoffteilchen weitestgehend gereinigte Kondensat steigt zusammen mit den im Kondensat befindlichen Öltröpfchen oder schwimmenden Verbrennungsrückständen im Freiraum 15 zwischen der Trenneinrichtung 14 und der Gehäusewand 17 nach oben. Vorteilhafterweise verhindert die Trenneinrichtung 14 den Kontakt zwischen den schwimmenden Verbrennungsrückständen bzw. Öltröpfchen bzw. dem Öl und dem Bindemittel 7 in der ersten Kammer 6. Das Kondensat läuft über die Trenneinrichtung 14 in die dem Freiraum 15 benachbarte erste Kammer 6. Die unverbrannten Kohlenwasserstoffe bzw. Öltröpfchen sammeln sich dabei an der Oberfläche und sind durch eine Wasserschicht vom Bindemittel 7 getrennt. Die unverbrannten Kohlenwasserstoffe bzw. Öltröpfchen werden entweder durch Aufsaugkörper aufgenommen oder es sind in einem geodätisch höherliegenden Bereich des Gehäuses 1 Bakterien vorgesehen, welche die Kohlenwasserstoffe bzw. Öltröpfchen biologisch zu einer gallertartigen Masse abbauen. Das weitestgehend gereinigte Kondensat durchfließt das Bindemittel 7. In dem Bindemittel 7 werden im Wesentlichen die noch im Kondensat enthaltenen gelösten und ungelösten Kohlenwasserstoffe und Metallionen aufgenommen bzw. absorbiert.

Aus der Bindemittelkammer 6 gelangt das auf diese Weise von Feststoffteilchen und Kohlenwasserstoffen bzw. Öl weitestgehend gereinigte Kondensat über die mindestens eine Durchflussöffnung 10 in der zwischen den Kammern 6, 8 befindlichen Trennwand 5 in die mit Neutralisationsmittel 9 gefüllte zweite Kammer 8 zur Neutralisation. Hierbei wird der pH-Wert des Kondensats auf einen zulässigen Wert angehoben. Vorteilhafterweise auf einen pH-Wert zwischen 6,5 und 7,0. Anschließend läuft das neutralisierte Kondensat bzw. das Wasser über die Trenneinrichtung 19 in den Freiraum 20 zwischen der weiteren Trenneinrichtung 19 und der Gehäusewand 21. Von dort gelangt das Wasser über den Kondensatauslass 11 in der Regel in die hier nicht dargestellte Kanalisation. Es fließt die Überlaufmenge an Wasser aus dem Gehäuse 1, welche durch das ständig anfallende Kondensat erzeugt wird.

### Bezugszeichenliste für BOM 1856

| | |
|---|---|
| 1 | Gehäuse |
| 2 | Gehäuseboden |
| 3 | Deckel |
| 4 | Kondensateinlass |
| 5 | Trennwand |
| 6 | Bindemittelkammer |
| 7 | Bindemittel |
| 8 | Neutralisationskammer |
| 9 | Neutralisationsmittel |
| 10 | Durchflussöffnung |
| 11 | Kondensatauslass |
| 12 | Anschluss |
| 13 | Anschluss |
| 14 | Trenneinrichtung |
| 15 | Freiraum |
| 16 | Längsachse |
| 17 | Gehäusewand |
| 18 | Entleerungsöffnung |
| 19 | weitere Trenneinrichtung |
| 20 | Freiraum |
| 21 | Gehäusewand |
| 22 | Warneinrichtung |
| 23 | maximale Füllhöhe |

## Patentansprüche

1. Vorrichtung zur Neutralisation von Kondensat aus einem Heizgerät, welche mindestens ein Gehäuse (1) mit einem Gehäuseboden (2), mit mindestens einer Trennwand (5) zur Unterteilung des Gehäuses (1) in eine erste Kammer (6) zur Aufnahme von Bindemittel (7) und in eine zweite Kammer (8) zur Aufnahme von Neutralisationsmittel (9), mit einem Kondensateinlass (4) und mit einem Kondensatauslass (11) aufweist,
**dadurch gekennzeichnet, dass**
im Bereich des Kondensateinlasses (4) eine Trenneinrichtung (14) vorgesehen ist, welche einen Kontakt zwischen im Kondensat enthaltenen Kohlenwasserstoffen und/oder Öl und dem Bindemittel (7) verhindert.

2. Vorrichtung nach Anspruch 1,
**dadurch gekennzeichnet, dass**
die Trenneinrichtung (14) fest oder verstellbar im Gehäuse (1) angeordnet ist.

3. Vorrichtung nach Anspruch 1 oder 2,
**dadurch gekennzeichnet, dass**
der Kondensateinlass (4) in der Nähe des Gehäusebodens (2) mündet.

4. Vorrichtung nach einem der vorhergehenden Ansprüche,
**dadurch gekennzeichnet, dass**
der Kondensateinlass (4) in einen Freiraum (15) zwischen der Trenneinrichtung (14) und einer Gehäusewand (17) mündet.

5. Vorrichtung nach einem der vorhergehenden Ansprüche,
**dadurch gekennzeichnet, dass**
im Bereich des Kondensatauslasses (11) eine Trenneinrichtung (19) vorgesehen ist, welche einen Freiraum (20) zwischen einer Gehäusewand (21) und dem Neutralisationsmittel (9) schafft.

6. Vorrichtung nach Anspruch 5,
**dadurch gekennzeichnet, dass**
die Trenneinrichtung (19) fest oder verstellbar im Gehäuse (1) angeordnet ist.

7. Vorrichtung nach einem der vorhergehenden Ansprüche,
**dadurch gekennzeichnet, dass**
in einem geodätisch obenliegenden Bereich des Gehäuses (1) eine Warneinrichtung (22) vorgesehen ist, die eine Störmeldung ausgibt, wenn ein maximaler Flüssigkeitsstand (23) im Gehäuse (1) überschritten ist.

8. Vorrichtung nach einem der vorhergehenden Ansprüche,
**dadurch gekennzeichnet, dass**
am Kondensateinlass (4) und/oder am Kondensatauslass (11) leicht demontierbare Anschlüsse (12, 13) vorgesehen sind.

9. Vorrichtung nach einem der vorhergehenden Ansprüche,
**dadurch gekennzeichnet, dass**
die Trennwand (5) mindestens eine Durchflussöffnung (10) aufweist.

10. Vorrichtung nach einem der vorhergehenden Ansprüche,
**dadurch gekennzeichnet, dass**
das Gehäuse (1) mit einem abnehmbaren Deckel (3) verschließbar ist.

11. Vorrichtung nach einem der vorhergehenden Ansprüche,
**gekennzeichnet durch**
ein Bindemittel (7), welches zur Absorption von Metallverbindungen und/oder unverbrannten Kohlenwasserstoffen dient.

12. Vorrichtung nach einem der vorhergehenden Ansprüche,
**dadurch gekennzeichnet, dass**
das in einem geodätisch höherliegenden Bereich des Gehäuses (1) Bakterien vorgesehen sind, welche nach obensteigende unverbrannte Kohlenwasserstoffe und/oder Schwefel biologisch zu einer gallertartigen Masse abbauen.

13. Vorrichtung nach einem der vorhergehenden Ansprüche,
**gekennzeichnet durch**
die Ausbildung einer Wassersperre zur Vermeidung eines Austritts von Gasen aus dem Heizgerät.

14. Vorrichtung nach einem der vorhergehenden Ansprüche,
**gekennzeichnet durch**
die Verwendung bei Heizgeräten für feste, gasförmige und/oder flüssige Brennstoffe.
